# FASCICULE DE BREVET EUROPEEN

(11) **EP 3 718 082 B1**
(45) Date de publication et mention de la délivrance du brevet: **17.04.2024**
(21) Numéro de dépôt: 18804334.3
(22) Date de dépôt: 23.11.2018
(51) Int. Cl.: G06T 7/20, G08B 13/196, G08B 29/18

(54) **PROCEDE DE DETECTION ET DE PISTAGE DE CIBLES**
VERFAHREN ZUR DETEKTION UND VERFOLGUNG VON ZIELEN
METHOD FOR DETECTING AND TRACKING TARGETS

(30) Priorité: 29.11.2017 FR 1761364
(43) Date de publication de la demande: 07.10.2020
(73) Titulaire: Safran Electronics & Defense, 75015 Paris (FR)
(72) Inventeur: MALTESE, Dominique, 92100 Boulogne Billancourt (FR)
(74) Mandataire: Cabinet Le Guen Maillet
(86) Numéro de dépôt international: PCT/EP2018/082353
(87) Numéro de publication internationale: WO 2019/105858

(56) Documents cités:
- US-A1- 2007 127 774
- US-A1- 2008 181 453
- US-A1- 2016 171 311
- SANCHEZ-MATILLA RICARDO ET AL: "Online Multi-target Tracking with Strong and Weak Detections", 3 novembre 2016 (2016-11-03), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047361057, ISSN: 0302-9743 ISBN: 978-3-642-38287-1 [extrait le 2016-11-03] abrégé Section 2 Strong and weak detections; page 3 - page 5 Section 4.3 Initialization; page 7 - page 8 Section 7 Conclusion; page 13 - page 14
- CHEN JIAHUI ET AL: "Enhancing Detection Model for Multiple Hypothesis Tracking", 2017 IEEE CONFERENCE ON COMPUTER VISION AND PATTERN RECOGNITION WORKSHOPS (CVPRW), IEEE, 21 juillet 2017 (2017-07-21), pages 2143-2152, XP033146008, DOI: 10.1109/CVPRW.2017.266

## Description

L'invention concerne un procédé de détection et de pistage de cibles, ainsi qu'un dispositif et un équipement adaptés pour mettre en oeuvre ledit procédé.

Des méthodes utilisant une détection et un pistage de cibles (« object détection and tracking » en terminologie anglo-saxonne) sont couramment utilisées pour effectuer des surveillances d'environnement, notamment dans les domaines aérien et maritime. Ces méthodes consistent à saisir successivement une série d'images optroniques de l'environnement, à rechercher dans chacune des images des indices d'une présence d'une cible potentielle, puis lorsque des indices ont été trouvés, à confirmer ou infirmer la présence réelle d'une cible en déterminant si une répétition de détections cohérentes existe dans plusieurs images successives.

Les termes suivants sont utilisés dans la détection et le suivi de cibles :
- Plot ou point chaud (« spot » en terminologie anglo-saxonne) : sous-partie d'une image comprenant des pixels adjacents ayant des caractéristiques homogènes entre elles et différentes des pixels d'un voisinage proche de la sous-partie dans l'image. Un plot est détecté en appliquant un critère de détection. Ce critère de détection peut être établi en fonction d'un niveau moyen de signal et/ou d'un niveau de bruit dans l'image. Par exemple, un pixel peut être considéré comme appartenant à un plot lorsque son niveau de luminance possède un écart avec un niveau moyen de luminance des pixels de son voisinage proche dans l'image supérieur à un seuil de détection prédéfini. Plus généralement, la détection d'un plot peut être basée sur une observation de valeurs de rapport signal à bruit (« Signal to Noise Ratio (SNR) » en terminologie anglo-saxonne) des pixels de l'image. Un pixel dont le SNR est supérieur à un seuil de détection prédéfini est considéré comme appartenant à un plot. Un plot peut correspondre à une cible ou à une aberration de détection dans une image.
- Piste : chaîne spatio-temporelle de plots détectés dans plusieurs images successives. Une piste peut avoir trois états : *piste candidate* (en cours d'initialisation ou bifurquée), *piste confirmée* ou *piste abandonnée.* Les états d'une piste sont actualisés en utilisant une *fonction de gestion de piste.* La fonction de gestion de piste alloue l'état de piste candidate à chaque nouvelle piste. Une piste candidate est habituellement initialisée à partir de plots qui n'ont pas été utilisés pour mettre à jour une piste confirmée existante. La fonction de gestion de piste peut confirmer une piste candidate en utilisant des techniques plus ou moins sophistiquées suivant un niveau de performance ou de fausse alarme souhaité. Par exemple, une piste peut être confirmée lorsqu'une chaîne spatio-temporelle de plots peut être construite à partir de plots trouvés dans *Q* images d'une suite de *P* images consécutives (*P* > *Q*). La fonction de gestion de pistes alloue l'état abandonné à une piste lorsque des caractéristiques de ladite piste ne remplissent plus un critère prédéfini comme par exemple lorsque la piste n'a pas été mise à jour avec un nouveau plot pendant un nombre d'images consécutives supérieur à un seuil prédéfini.
- Algorithme d'affectation de plots aux pistes : Un algorithme d'affectation de plots aux pistes permet d'associer un plot à une piste existante (confirmée ou en cours d'initialisation). Lorsqu'une nouvelle image (dite « image courante ») est obtenue par un procédé de détection et de pistage de cibles, celle-ci est analysée afin d'y rechercher des plots. En parallèle, une prédiction d'une position d'un plot, dit « plot prédit » est effectuée à partir de chaque piste existante afin de déterminer où peut se trouver un plot permettant de poursuivre ladite piste. Cette prédiction de la position du plot prédit se fait généralement en utilisant une *fonction d'entretien de piste.* Une à deux fenêtres de validation sont alors définies autour de la position du plot prédit. On parle alors de fenêtre de prédiction et de fenêtre d'évolution. On cherche alors un plot adapté pour poursuivre ladite piste dans ces fenêtres de validation. L'affectation peut comprendre deux étapes : la pré-corrélation et l'affectation définitive. Lors de la pré-corrélation, on indique les plots candidats à l'association de chaque piste. Il s'agit de prendre en compte tous les plots qui tombent dans la fenêtre de validation de la piste. On forme ainsi un tableau indiquant si un plot fait partie des candidats pouvant être associés à une piste. Lors de l'affectation définitive, on procède à une analyse plus fine des relations entre les plots et les pistes. Il existe diverses méthodes d'affectation définitive. On peut ainsi citer par exemple la méthode du plus proche voisin globale (« Global Nearest Neighbor Approach (GNN) » en terminologie anglo-saxonne) ou la méthode du plus proche voisin sous optimale (« Suboptimal Nearest Neighbor (SNN) » en terminologie anglo-saxonne) décrites toutes deux dans l'article « A study of a target Tracking Algorithm Using Global Nearest Neighbor Approach, P. Konstantinova, International Conference on computer systems and technologies (CompSysTech 2003*) ».*
- Fonction entretien de piste : une fonction entretien de piste assure une estimation à un instant courant et une prédiction à un instant suivant l'instant courant de propriétés cinématiques d'une cible pistée à partir d'une piste. Cette fonction est généralement mise en oeuvre par un filtre de Kalman.

Les méthodes de détection et de suivi de cibles doivent trouver un compromis entre détecter efficacement des plots et éviter d'augmenter une probabilité de fausse alarme (*i.e.* de créer des pistes pour des ensembles de pixels ne correspondant pas à des cibles). Il est connu que plus le nombre de plots détectés augmente, plus la probabilité de fausse alarme augmente. Pour que le nombre de plots reste raisonnable, on augmente en général la valeur du seuil de détection.

D'un autre côté, il est connu qu'une cible peut évoluer dans un environnement variable.

Par ailleurs, l'article SANCHEZ-MATILLA RICARDO ET AL: "Online Multi-target Tracking with Strong and Weak Détections", 3 novembre 2016 (2016-11-03), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, XP047361057, divulgue un procédé de suivi de cibles qui classifie les détections par rapport à leur fiabilité, déterminée à partir d'une mesure de confiance. Les détections fortes dites "strong" sont utilisées pour l'initialisation et le suivi des cibles existantes, tandis que les détections faibles dites "weak" sont utilisées pour le suivi des cibles existantes afin de réduire le temps de prédiction et de garder un niveau faible d'incertitude du suivi des cibles.

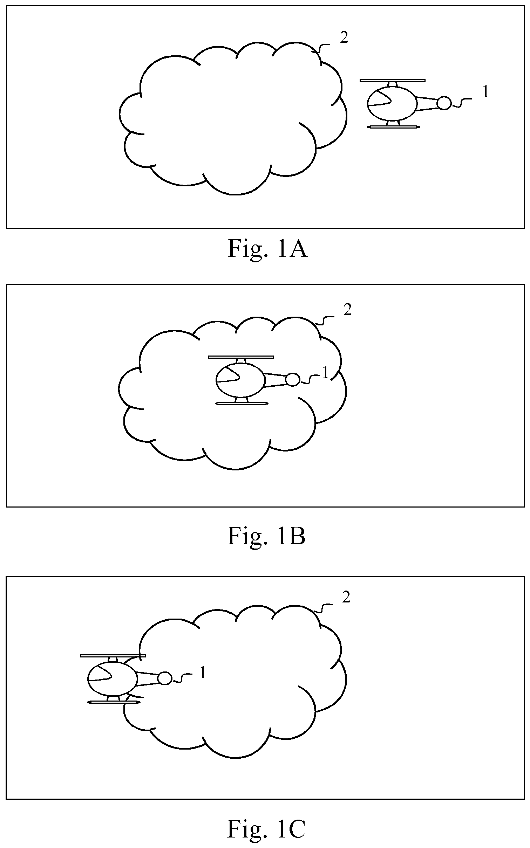

Les Figs. 1A, 1B et 1C représentent une image acquise par un dispositif optronique tel qu'une caméra (non représentée) dans laquelle un aéronef 1 évolue dans un environnement comportant un nuage 2. Lors de son évolution dans cet environnement, l'aéronef 1 passe successivement d'une zone sans nuage à une zone avec nuage, puis revient à une zone sans nuage. L'aéronef 1 est potentiellement une cible pouvant être détectée et pistée par un procédé de détection et de pistage de cible.

Dans l'image représentée par la Fig. 1A, les pixels correspondant à l'aéronef 1 ont des caractéristiques (valeurs de luminance, valeurs de SNR, ...) très différentes des pixels du voisinage de l'aéronef 1. On détecte alors sans difficulté un plot correspondant à l'aéronef 1 dans cette image. En effet, par exemple, les pixels correspondant à l'aéronef 1 ont des valeurs de SNR supérieures à un seuil de détection prédéterminé, ce qui n'est pas le cas des pixels situés au voisinage de l'aéronef 1. Ce plot peut alors être affecté à une piste existante qui aurait été créée à partir d'images précédant l'image de la Fig. 1A.

Dans l'image représentée par la Fig. 1B, les pixels correspondant à l'aéronef 1 sont noyés dans des pixels correspondant au nuage 2. Il est alors difficile de distinguer les pixels correspondant à l'aéronef 1 des pixels correspondant au nuage 2 car ces pixels ont des caractéristiques proches. En effet, le nuage 2 correspond à une zone texturée. Une zone texturée augmente fortement la variation des valeurs des pixels au voisinage d'une cible. La zone texturée entraîne une augmentation du bruit et donc une chute des valeurs de SNR. Par exemple, les pixels correspondant à l'aéronef 1 ont des valeurs de SNR faibles, inférieures au seuil de détection prédéfini, comme les pixels situés au voisinage de l'aéronef 1. La probabilité de ne pas détecter un plot correspondant à l'aéronef 1 est alors importante. Il y a un risque que la piste correspondant au suivi de l'aéronef 1 soit abandonnée.

Dans l'image représentée par la Fig. 1C, l'aéronef 1 retourne dans une zone dans laquelle les pixels qui lui correspondent ont des caractéristiques très différentes des pixels de son voisinage. De nouveau, les pixels correspondant à l'aéronef 1 ont des valeurs de SNR supérieures au seuil de détection prédéterminé. Il redevient alors facile de détecter un plot correspondant à l'aéronef 1. Si la piste a été abandonnée dans l'image correspondant à la Fig. 1B, il y a un risque de discontinuité de pistage, c'est-à-dire qu'une nouvelle piste soit créée avec un nouvel identifiant dans l'image correspondant à la Fig. 1C, alors que la cible (*i.e.* l'aéronef 1) est la même.

Cet exemple montre qu'utiliser un seuil de détection élevé permet d'éviter d'augmenter le nombre de plots détectés, mais en contrepartie, empêche de détecter des plots correspondant à des cibles réelles, lorsque les pixels correspondant à ces cibles sont situés dans un environnement défavorable à une détection.

Il est souhaitable de pallier ces inconvénients de l'état de la technique. Il est notamment souhaitable de proposer une méthode qui permette de suivre une cible dans un environnement défavorable à une détection.

Il est par ailleurs souhaitable de proposer une méthode qui soit simple à mettre en oeuvre et qui ait un coût calculatoire faible.

Selon un premier aspect de la présente invention, la présente invention concerne un procédé de détection et de pistage de cibles dans une série d'images fournies par un système optronique. Le procédé comprend pour une image courante : obtenir au moins un plot compris dans ladite image courante et pour chaque plot, une valeur représentative d'une caractéristique dudit plot ; classer chaque plot en fonction de ladite valeur représentative dans une première catégorie lorsque ladite valeur représentative est supérieure à un premier seuil prédéfini ou dans une deuxième catégorie lorsque ladite valeur représentative est comprise entre le premier seuil prédéfini et un deuxième seuil prédéfini inférieur au premier seuil prédéfini ; pour chaque chaîne spatio-temporelle de plots existante d'un premier type, dite piste existante du premier type, ayant été formée à partir de plots détectés dans des images de ladite série précédant l'image courante, affecter un plot de première catégorie à ladite piste existante du premier type lorsqu'au moins un plot de première catégorie est compatible suivant un critère prédéfini avec ladite piste existante du premier type, et lorsqu'aucun plot de première catégorie n'est compatible avec ladite piste existante du premier type, affecter un plot de deuxième catégorie lorsqu'au moins un plot de deuxième catégorie est compatible suivant le critère prédéfini avec la piste existante du premier type, une affectation à une piste existante du premier type permettant de poursuivre ladite piste existante du premier type dans l'image courante ; créer une nouvelle piste du premier type pour chaque plot de première catégorie n'ayant pas été affecté à une piste existante ; classer chaque plot de deuxième catégorie n'ayant pas été affecté à une piste existante du premier type dans une troisième catégorie si un nombre de pixels composant ce plot est supérieur à un troisième seuil prédéfini et dans un quatrième catégorie sinon ; pour chaque chaîne spatio-temporelle de plots existante d'au moins un deuxième type, dite piste existante du deuxième type, ayant été formée à partir de plots détectés dans des images de ladite série précédant l'image courante, affecter un plot de troisième catégorie à ladite piste existante du deuxième type lorsqu'au moins un plot de troisième catégorie est compatible suivant le critère prédéfini avec ladite piste existante du deuxième type et transformer ladite piste existante du deuxième type en piste existante de premier type lorsque le nombre de plots composant ladite piste dépasse un nombre de plots prédéfini ; créer une nouvelle piste du deuxième type pour chaque plot de troisième catégorie n'ayant pas été affecté à une piste existante du deuxième type.

Selon un mode de réalisation, la valeur représentative d'une caractéristique dudit plot est une valeur de SNR représentative de valeurs de SNR de pixels appartenant audit plot, les premier et deuxième seuils prédéfinis étant des valeurs prédéfinies de SNR.

Selon un mode de réalisation, un plot est compatible avec une piste existante du premier ou du deuxième type lorsqu'il est compris dans une sous-partie de l'image courante, dite fenêtre de validation, correspondant à ladite piste, une fenêtre de validation étant définie autour d'une prédiction d'une position, dite position prédite, dans laquelle doit se trouver un plot correspondant à ladite piste dans l'image courante, ladite position étant obtenue à partir d'une fonction d'entretien de piste en prenant en compte des propriétés cinématiques d'une cible pistée à partir de ladite piste.

Selon un mode de réalisation, lorsqu'une pluralité de plots de première catégorie est compatible avec une piste existante du premier type, le plot de première catégorie le plus proche de la position prédite selon un critère de proximité prédéfini est affecté à ladite piste et lorsqu'une pluralité de plots de deuxième catégorie est compatible avec une piste existante du deuxième type, le plot de deuxième catégorie le plus proche de la position prédite selon le critère de proximité prédéfini est sélectionné, seuls des plots de première ou deuxième catégorie pouvant être affectés à une piste de premier type.

Selon un mode de réalisation, lorsqu'une pluralité de plots de troisième catégorie est compatible avec une piste existante du deuxième type, le plot de troisième catégorie le plus proche de la position prédite selon le critère de proximité prédéfini est affecté à ladite piste, seuls des plots de troisième catégorie pouvant être affectés à une piste de deuxième type.

Selon un mode de réalisation, les pistes du deuxième type comprennent deux sous-types de pistes, une piste du deuxième type étant du premier sous-type tant qu'elle comprend un nombre de plots de troisième catégorie inférieur au nombre de plots prédéfini, une piste du deuxième type étant du deuxième sous-type lorsqu'elle comprend un nombre de plots supérieur au premier nombre de plots prédéfini, une piste de deuxième type du deuxième sous-type étant transformée en une piste du premier type lorsqu'une somme de valeurs de SNR représentative de plots constituant ladite piste du deuxième type est supérieure à un quatrième seuil prédéfini sur un nombre de plots successifs prédéfini, ou lorsqu'une évolution de la taille des plots de ladite piste du deuxième type est strictement croissante sur un deuxième nombre de plots successifs prédéfini, ou lorsqu'une évolution du SNR des plots de ladite piste du deuxième type est strictement croissante sur un troisième nombre de plots successifs prédéfini.

Selon un mode de réalisation, suite à l'affectation des plots de première ou de deuxième catégories à la piste existante du premier type, et avant la création d'une nouvelle piste du premier type pour chaque plot de première catégorie n'ayant pas été affecté à une piste existante, le procédé comprend en outre pour chaque piste existante du deuxième type du deuxième sous-type, affecter un plot de première catégorie à ladite piste lorsqu'au moins un plot de première catégorie est compatible suivant un critère d'affectation prédéfini avec ladite piste et, lorsqu'aucun plot de première catégorie n'est compatible avec ladite piste, affecter un plot de deuxième catégorie lorsqu'au moins un plot de deuxième catégorie est compatible suivant le critère d'affectation prédéfini avec ladite piste.

Selon un deuxième aspect de l'invention, l'invention concerne un dispositif comprenant des moyens pour mettre en oeuvre le procédé selon le premier aspect.

Selon un troisième aspect de l'invention, l'invention concerne un équipement comprenant un dispositif selon le deuxième aspect.

Selon un quatrième aspect de l'invention, l'invention concerne un programme d'ordinateur, comprenant des instructions pour mettre en oeuvre, par un dispositif, le procédé selon le premier aspect, lorsque ledit programme est exécuté par un processeur dudit dispositif.

Selon un cinquième aspect de l'invention, l'invention concerne des moyens de stockage, stockant un programme d'ordinateur comprenant des instructions pour mettre en oeuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- les Figs. 1A, 1B et 1C illustrent schématiquement des images acquises par un dispositif optronique tel qu'une caméra (non représentée) dans laquelle un aéronef évolue dans un environnement comportant un nuage ;
- la Fig. 2A illustre schématiquement un équipement apte à mettre en oeuvre l'invention ;
- la Fig. 2B illustre schématiquement une architecture matérielle d'un module d'analyse apte à mettre en oeuvre l'invention ;
- la Fig. 3 illustre schématiquement un procédé de détection et de pistage de cibles selon l'invention ;
- la Fig. 4 illustre schématiquement un premier détail du procédé de détection et de pistage de cibles selon l'invention ;
- la Fig. 5 illustre schématiquement un deuxième détail du procédé de détection et de pistage de cibles selon l'invention ; et,
- la Fig. 6 illustre schématiquement un troisième détail du procédé de détection et de pistage de cibles selon l'invention.

L'invention est décrite par la suite dans un contexte de surveillance aérienne utilisant un dispositif d'acquisition d'images faisant des acquisitions d'images dans un domaine visible. L'invention pourrait tout aussi bien s'appliquer dans des contextes de surveillance différents tels que la surveillance maritime. Par ailleurs, l'invention s'applique à d'autres types d'images (*i.e*. d'autres domaines spectraux) telles que les images infra-rouges, les images thermiques et les images radar.

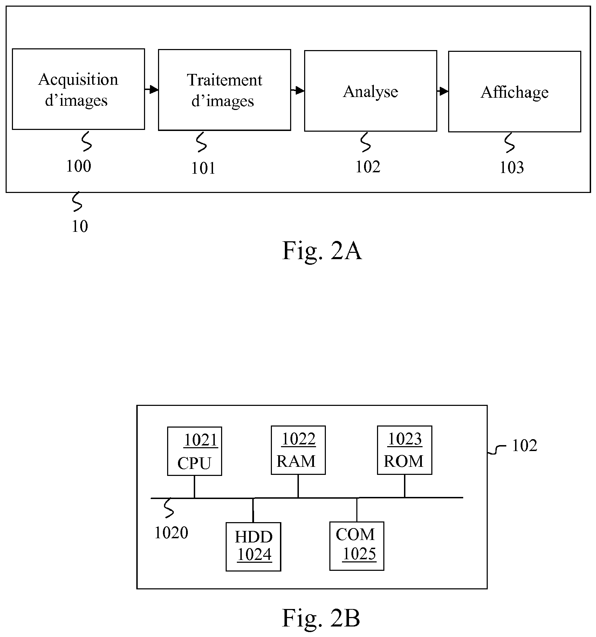

La **Fig. 2A** illustre schématiquement un équipement 10 apte à mettre en oeuvre l'invention.

L'équipement 10 comprend un module d'acquisition d'images 100 tel qu'une caméra opérant dans le domaine spectral du visible. Le module d'acquisition d'images 100 fournit les images qu'il a acquises à un module de traitement d'images 101. Le module de traitement d'images 101 est apte, entre autres, à détecter des plots dans chaque image et à calculer au moins une valeur représentative de chaque plot.

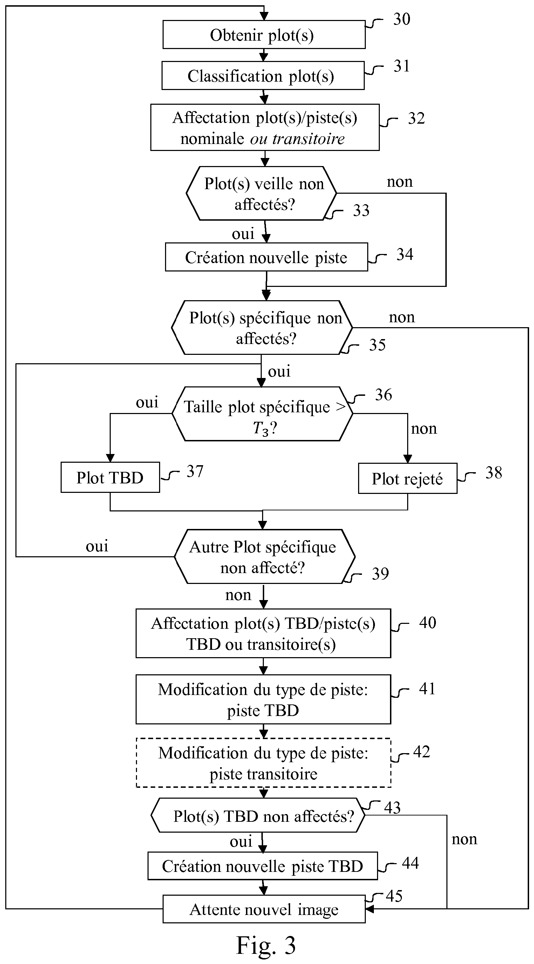

Le module de traitement d'images 101 fournit les images acquises, la position de chaque plot détecté et pour chaque plot détecté, une valeur représentative dudit plot à un module d'analyse 102. Le module d'analyse 102 met en oeuvre un procédé de détection et de suivi de cible selon l'invention. Ce procédé que nous décrivons par la suite en relation avec les Figs. 3, 4, 5 et 6 est capable de créer de nouvelles pistes, de prolonger des pistes et d'abandonner des pistes. Le module d'analyse 102 est responsable de la confirmation des pistes et utilise pour cela une fonction de gestion de piste.

Pour chaque image acquise, le module d'analyse 102 transmet une information représentative de chaque piste confirmée à un module d'affichage 103 qui affiche cette information pour qu'elle puisse être utilisée par un opérateur. Par exemple, le module d'analyse 102 fournit au module d'affichage 103 une information représentative d'une position de chaque plot détecté dans la dernière image acquise qui a pu être affecté à une piste confirmée.

On considère que l'équipement 10 forme un système optronique.

Dans la Fig. 2A, les modules d'acquisition d'images 100, de traitement d'images 101, d'analyse 102 et d'affichage 103 sont représentés comme faisant partie d'un même équipement 10. Dans un mode de réalisation, ces modules pourraient aussi être compris dans des équipements ou des dispositifs différents comprenant chacun un module de communication leur permettant de communiquer les uns avec les autres. Ces équipements ou dispositifs forment alors un système optronique apte à mettre en oeuvre l'invention.

La **Fig. 2B** illustre schématiquement un exemple d'une architecture matérielle d'un module d'analyse apte à mettre en oeuvre l'invention.

Selon l'exemple d'architecture matérielle représenté à la Fig. 2B, le module d'analyse 102 comprend alors, reliés par un bus de communication 1020 : un processeur ou CPU (« Central Processing Unit » en anglais) 1021 ; une mémoire vive RAM (« Random Access Memory » en anglais) 1022 ; une mémoire morte ROM (« Read Only Memory » en anglais) 1023 ; une unité de stockage telle qu'un disque dur ou un lecteur de support de stockage, tel qu'un lecteur de cartes SD (« Secure Digital » en anglais) 1024 ; au moins une interface de communication 1025 permettant au module d'analyse 102 de communiquer avec le module de traitement d'images 101 et le module d'affichage 103.

Le processeur 1021 est capable d'exécuter des instructions chargées dans la RAM 1022 à partir de la ROM 1023, d'une mémoire externe (non représentée), d'un support de stockage (tel qu'une carte SD), ou d'un réseau de communication. Lorsque l'équipement 10 est mis sous tension, le processeur 1021 est capable de lire de la RAM 1022 des instructions et de les exécuter. Ces instructions forment un programme d'ordinateur causant la mise en oeuvre complète ou partielle, par le processeur 1021, des procédés décrits ci-après en relation avec les Figs. 3, 4, 5 et 6.

Les procédés décrits en relation avec les Figs. 3, 4, 5 et 6 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un procédé de détection et de pistage de cibles selon l'invention.

Le procédé est mis en oeuvre pour chaque image acquise par le module d'acquisition d'images 100. Une image en cours de traitement par l'équipement 10 est appelée image courante par la suite. Dans un mode de réalisation, nous supposons qu'au moins une piste, dite *piste existante*, a été formée à partir de plots détectés dans des images précédant l'image courante.

Comme nous le verrons par la suite, le procédé utilise une pluralité de types de pistes comprenant des pistes de type *nominal*, dites *pistes nominales* et au moins un deuxième type de pistes comprenant des pistes de type *TBD*, dites *pistes TBD* (Pister avant de détecter : « Track Before Detect » en terminologie anglo-saxonne).

Une piste est considérée de *type nominal* lorsqu'elle est constituée d'un plot ou d'un ensemble de plots ayant un intérêt pour effectuer un suivi de cible suivant au moins une première condition prédéfinie. Un premier exemple de première condition prédéfinie est tel qu'une piste comprenant au moins un plot ayant une valeur de SNR supérieure à un seuil de SNR prédéfini est considérée comme une piste nominale. Un deuxième exemple de première condition prédéfinie est tel qu'une piste comprenant un nombre de plots supérieur à un nombre prédéfini est considérée comme une piste nominale. Chaque piste nominale peut être une piste confirmée, une piste en cours d'initialisation ou une piste bifurquée créée à partir d'une piste confirmée.

Une piste est considérée de type TBD lorsqu'elle ne remplit aucune première condition prédéfinie. Une piste TBD doit toutefois remplir au moins une deuxième condition prédéfinie que nous décrivons par la suite.

On note que seules les pistes nominales peuvent être confirmées par le module d'analyse 102. Pour ce faire, le module d'analyse 102 exécute une fonction de gestion de piste consistant à confirmer une piste nominale lorsque ladite piste nominale a été construite à partir de *Q* plots trouvés dans *Q* images d'une suite de *P* images consécutives (*P* > *Q*), *P* et *Q* étant des nombres entiers positifs prédéfinis. Dans un mode de réalisation *P*=20 et *Q*=16. Une piste de deuxième type n'est jamais confirmée.

Dans une étape 30, le module d'analyse 102 obtient au moins un plot compris dans ladite image courante et pour chaque plot, une valeur représentative d'une caractéristique dudit plot *VR.* Dans un mode de réalisation, la valeur représentative d'un plot *VR* est par exemple une valeur de SNR moyen des pixels constituant ledit plot.

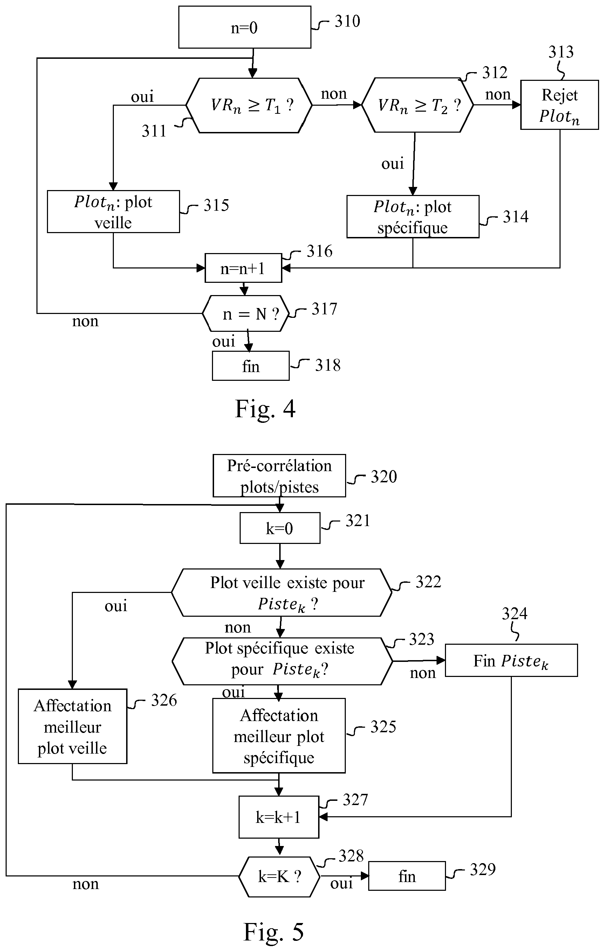

Dans une étape 31, le module d'analyse 102 classe chaque plot en fonction de ladite valeur représentative *VR* dans une première catégorie lorsque ladite valeur *VR* est supérieure à un premier seuil prédéfini *T*₁ ou dans une deuxième catégorie lorsque ladite valeur représentative *VR* est comprise entre le premier seuil prédéfini *T*₁ et un deuxième seuil prédéfini *T*₂ inférieur au premier seuil prédéfini *T*₁. La première catégorie comprend des plots pour lesquels la probabilité de fausse alarme est faible, appelés *plots veille.* La deuxième catégorie comprend des plots pour lesquels la probabilité de fausse alarme est plus élevée que pour les plots veille. On appelle les plots classés dans la deuxième catégorie, *plots spécifiques.* Dans le mode de réalisation dans lequel la valeur représentative d'un plot *VR* est une valeur de SNR moyen, les premier et deuxième seuils *T*₁ et *T*₂ sont des valeurs de SNR obtenues sur des séquences d'images d'entraînement. Nous détaillons par la suite le classement des plots dans des catégories en relation avec la Fig. 4.

Dans une étape 32, le module d'analyse 102 met en oeuvre un algorithme d'affectation de plots aux pistes nominales existantes.

Dans le cadre de cet algorithme, pour chaque piste nominale existante, le module d'analyse 102 affecte un plot veille à ladite piste nominale existante lorsqu'au moins un plot veille est compatible suivant un critère d'affectation prédéfini avec ladite piste nominale existante. Lorsqu'aucun plot veille n'est compatible avec ladite piste nominale existante, le module d'analyse 102 affecte un plot spécifique lorsqu'au moins un plot spécifique est compatible suivant le critère d'affectation prédéfini avec la piste nominale existante.

De cette manière, on privilégie les affectations de plots veilles puisque ce sont les plots qui présentent le moins de risque de fausses alarmes (*i.e.* le moins de risque d'engendrer de fausses pistes nominales ou de poursuivre des pistes nominales alors que la cible correspondante n'est plus observée par le module d'acquisition d'images 100). On prend toutefois en compte les plots spécifiques pour poursuivre des pistes nominales existantes pour lesquelles aucun plot veille compatible n'a été trouvé. Ainsi, des pistes nominales sont poursuivies avec des plots de moins bonne qualité en termes de probabilité de fausse alarme. Néanmoins, utiliser des plots spécifiques pour poursuivre une piste nominale existante permet de poursuivre des pistes nominales qui auraient été abandonnées par erreur, lorsque par exemple, une cible traverse un environnement où la détection est difficile ou lorsque la cible se trouve en limite de portée du module d'acquisition d'images 100.

On note que lorsque qu'aucune piste nominale existante n'a été formée sur les images précédentes, l'étape 32 d'affectation de piste n'est pas mise en oeuvre. Le module d'analyse 102 passe alors directement de l'étape 31 à une étape 33.

Dans l'étape 33, le module d'analyse 102 vérifie si des plots veille n'ont pas été affectés à une piste existante.

Si c'est le cas, l'étape 33 est suivie d'une étape 34 au cours de laquelle le module d'analyse 102 crée une piste candidate à partir des plots veille n'ayant pas été affectés à une piste existante.

Suite à l'étape 34 (ou suite à l'étape 33 s'il ne reste pas de plots veilles après la mise en oeuvre de l'algorithme d'affectation de plots), le module d'analyse 102 met en oeuvre une étape 35 au cours de laquelle le module d'analyse 102 détermine si au moins un plot spécifique n'a pas été affecté à une piste nominale existante.

Si chaque plot spécifique a été affecté, le module d'analyse 102 se met en attente d'une nouvelle image dans une étape 45 et retourne à l'étape 30 lorsqu'une nouvelle image lui est fournie par le module de traitement d'images 101.

Si au moins un plot spécifique n'a pas été affecté, le module d'analyse 102 détermine pour chaque plot spécifique restant, si ce plot spécifique doit être définitivement rejeté, ou si ce plot doit être conservé pour créer ou continuer une piste TBD. Pour ce faire, le module d'analyse 102 exécute des étapes 36 à 39 pour chaque plot spécifique non affecté. Lors de l'étape 36, le module d'analyse 102 classe ledit plot spécifique dans une troisième catégorie lors d'une étape 37 si un nombre de pixels composant ce plot spécifique est supérieur à un seuil *T*₃ et dans une quatrième catégorie sinon lors d'une étape 38. On appelle un plot de troisième catégorie, plot TBD. Les plots de quatrième catégorie sont définitivement rejetés par le module d'analyse 102. Dans un mode de réalisation *T*₃=6 pixels.

Dans une étape 39, le module d'analyse 102 détermine si au moins un autre plot spécifique non affecté reste à traiter. Si oui, le module d'analyse 102 retourne à l'étape 36. Sinon, le module d'analyse 102 exécute une étape 40.

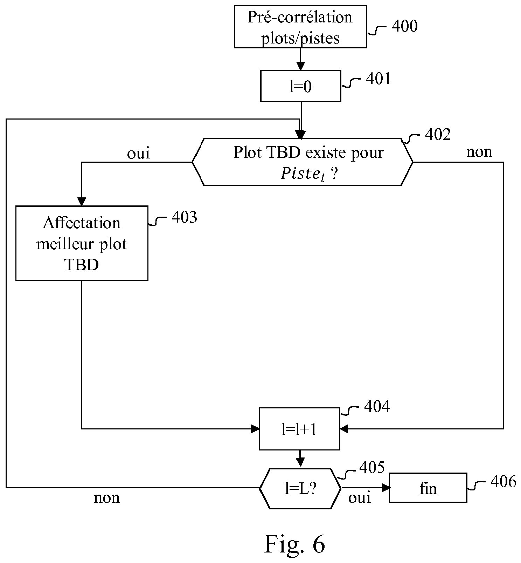

Au cours de l'étape 40, le module d'analyse 102 met en oeuvre un algorithme d'affectation de plots aux pistes TBD existantes. Dans le cadre de cet algorithme, pour chaque piste TBD existante, le module d'analyse 102 affecte un plot TBD à ladite piste TBD existante lorsqu'au moins un plot TBD est compatible suivant le critère d'affectation prédéfini avec ladite piste TBD existante. L'étape 40 est détaillée en relation avec la Fig. 6.

Un exemple de deuxième condition prédéfinie que doit respecter une piste TBD est donc qu'elle est constituée de plots TBD, c'est-à-dire constituée d'au moins un plot spécifique non affecté à une piste nominale existante, ayant une valeur représentative VR inférieure à *T*₁ et supérieure à *T*₂ et constitué d'un nombre de pixels supérieur au seuil *T*₃.

Dans une étape 41, le module d'analyse 102 détermine pour chaque piste TBD existante, s'il peut transformer ladite piste TBD en piste nominale. Dans un mode de réalisation, le module d'analyse 102 transforme la piste TBD en piste nominale lorsque le nombre de plots composant ladite piste TBD dépasse un nombre prédéfini *NB1.* Dans un mode de réalisation *NB1*=40.

Dans une étape 43, le module d'analyse 102 détermine si des plots TBD n'ont pas été affectés à une piste existante. Si tous les plots TBD ont été affectés, le module d'analyse 102 exécute l'étape 45 déjà expliquée. Sinon, lors d'une étape 44, le module d'analyse 102 crée une nouvelle piste TBD pour chaque plot TBD n'ayant pas été affecté à une piste existante. L'étape 44 est suivie de l'étape 45.

Dans un mode de réalisation, les pistes de deuxième type comprennent les pistes TBD et des pistes dites *pistes transitoires.* On peut considérer alors que le deuxième type de piste comprend deux sous-types. Les pistes transitoires sont des pistes intermédiaires entre les pistes TBD et les pistes nominales. Le module d'analyse 102 transforme une piste TBD en piste transitoire lorsque le nombre de plots composant ladite piste TBD dépasse un nombre prédéfini NB2<NB1. Dans un mode de réalisation *NB2*=20*.* Le module d'analyse 102 transforme une piste transitoire en piste nominale lorsqu'une condition de transformation de transitoire vers nominale est respectée. Par exemple, le module d'analyse 102 transforme une piste transitoire en piste nominale lorsqu'une somme des SNR moyens de plots constituant la piste transitoire est supérieure à un seuil *T*₄ sur un nombre de plots successifs prédéfini *nbp1*, ou lorsqu'une évolution de la taille des plots de la piste transitoire est strictement croissante sur un nombre de plots successifs prédéfini *nbp2*, ou lorsqu'une évolution du SNR des plots de la piste transitoire est strictement croissante sur un nombre de plots successifs prédéfini *nbp3.* Dans un mode de réalisation *nbp1*=*nbp2*=*nbp3*=10 et *T*₄=30db.

Dans le mode de réalisation comprenant des pistes transitoires, lors de l'étape 32, le module d'analyse 102 met en oeuvre l'algorithme d'affectation de plots aux pistes nominales et transitoires existantes.

L'application de l'algorithme d'affectation de plots aux pistes nominales existantes est identique au mode de réalisation sans piste transitoire décrit en relation avec l'étape 32. Lorsque les pistes nominales existantes ont été parcourues, le module d'analyse 102 applique cet algorithme aux pistes transitoires existantes. Ainsi pour chaque piste transitoire existante, le module d'analyse 102 affecte un plot veille à ladite piste transitoire existante lorsqu'au moins un plot veille est compatible suivant un critère d'affectation prédéfini avec ladite piste transitoire existante. Lorsqu'aucun plot veille n'est compatible avec ladite piste transitoire existante, le module d'analyse 102 affecte un plot spécifique lorsqu'au moins un plot spécifique est compatible suivant le critère d'affectation prédéfini avec la piste transitoire existante.

Ainsi, des plots veilles ou spécifiques pourront être affectés aux pistes transitoires.

Dans le mode de réalisation comprenant des pistes transitoires, lors de l'étape 40, pour chaque piste TBD ou transitoire existante, le module d'analyse 102 affecte un plot TBD à ladite piste TBD ou transitoire existante lorsqu'au moins un plot TBD est compatible suivant le critère d'affectation prédéfini avec ladite piste TBD ou transitoire existante.

Lors de l'étape 41, le module d'analyse 102 transforme une piste TBD en piste transitoire lorsque le nombre de plots composant ladite piste TBD dépasse le nombre prédéfini NB2.

Lors d'une étape 42, le module d'analyse 102 transforme une piste transitoire en piste nominale lorsque la condition de transformation de transitoire vers nominale est respectée.

Les étapes 43, 44 restent identiques.

Dans un mode de réalisation, la valeur représentative d'un plot *VR* est une taille de plots en nombre de pixels constituant le plot, une entropie des pixels constituant le plot, ou un descripteur SURF (caractéristiques robustes accélérées, « Speeded Up Robust Features (SURF) » en terminologie anglo-saxonne, H. Bay et al., SURF : Speeded Up Robust Features, Computer Vision and Image Understanding (CVIU), Vol. 110, No. 3, pp. 346-359, 2008).

Dans le cas d'autres types de valeurs représentatives d'un plot *VR* (dimension du plot, entropie des pixels constituant le plot, descripteur SURF), les seuils utilisés *T*₁, *T*₂ et *T*₃ sont adaptés aux valeurs représentatives utilisées.

Utiliser plusieurs types de pistes permet d'appliquer un traitement différent à chaque type de piste. Par exemple, une piste nominale, si elle est confirmée, est destinée à être affichée sur le module d'affichage 103. Une piste TBD n'est jamais affichée car, par rapport à une piste nominale, les plots qui constituent une piste TBD ont plus de chances d'être de fausses alarmes. Cependant, plus une piste TBD persiste, plus la probabilité que cette piste soit constituée de plots correspondant à de fausses alarmes diminue. Cette piste peut par exemple correspondre à un objet (par exemple un aéronef) restant éloigné du module d'acquisition d'images 100 depuis un certain temps, ou un objet difficile à détecter par le module de traitement d'images 101 car bien camouflé. Dans ces conditions, il est préférable d'indiquer la présence de cet objet à un opérateur regardant le module d'affichage 103 et donc de transformer une piste TBD en piste nominale.

La **Fig. 4** illustre schématiquement l'étape 31 du procédé de détection et de pistage de cibles selon l'invention.

Dans une étape 310, le module d'analyse 102 initialise une variable *n* à la valeur « 0 ». La variable *n* sert à comptabiliser les plots à traiter lors de l'étape 31. A chaque itération du procédé décrit en relation avec la Fig. 4, un plot parmi les plots obtenus lors de l'étape 30, noté *Plotₙ,* est analysé par le module d'analyse 102.

Dans une étape 311, le module d'analyse 102 compare la valeur représentative du plot *Plotₙ,* notée *VRₙ*, au premier seuil *T*₁. Lorsque *VRₙ* ≥ *T*₁, le module d'analyse 102 classe le plot *Plotₙ* dans la catégorie plot veille lors d'une étape 315.

Si *VRₙ* < *T*₁, l'étape 311 est suivie d'une étape 312 au cours de laquelle le module d'analyse 102 compare la valeur *VRₙ* au deuxième seuil *T*₂. Lorsque *VRₙ* ≥ *T*₂, le module d'analyse 102 classe le plot *Plotₙ* dans la catégorie plot spécifique lors d'une étape 314.

Si *VRₙ* < *T*₂, l'étape 312 est suivie d'une étape 313 au cours de laquelle le plot *Plotₙ* est rejeté par le module d'analyse 102. Le plot *Plotₙ* n'est alors pas utilisé pour prolonger une piste ou pour créer une piste candidate.

Les étapes 315 et 314 sont suivies d'une étape 316 au cours de laquelle le module d'analyse 102 incrémente d'une unité la valeur de la variable n.

Dans une étape 317, la valeur de la variable *n* est comparée à une variable *N* représentant un nombre de plots détectés par le module de traitement d'images 101. Si *n*<*N*, le procédé décrit en relation avec la Fig. 4 se poursuit en retournant à l'étape 311. Si *n*=*N*, ce procédé se termine, ce qui met fin à l'étape 31.

Dans un mode de réalisation, lorsque la valeur représentative d'un plot est un SNR moyen des pixels constituant ce plot, *T*₁ = *12dB* et *T*₂ = *8dB.*

Dans un mode de réalisation, lorsque la valeur représentative d'un plot est un SNR moyen des pixels constituant ce plot, le seuil *T*₁ est une valeur de SNR prédéfinie, qui peut être mise à jour au cours de l'analyse de la série d'images acquises en fonction de valeurs moyennes de SNR de plots constatées dans les images. Le seuil *T*₂ peut être une valeur relative par rapport au seuil *T*₁. Par exemple, *T*₂ = *T*₁ - *4dB.*

La **Fig. 5** illustre schématiquement l'étape 32 du procédé de détection et de pistage de cibles selon l'invention.

Dans une étape 320, le module d'analyse 102 effectue une pré-corrélation entre chaque plot classé lors de l'étape 31 et chaque piste nominale existante. Un objectif de cette pré-corrélation est de déterminer pour chaque piste nominale existante, quel plot pourrait correspondre à cette piste. Dans un mode de réalisation, une fonction d'entretien de piste est appliquée à chaque piste nominale existante afin de déterminer où devrait se trouver un plot correspondant à ladite piste. Cette fonction d'entretien de piste permet de déterminer une position d'un plot prédit et une fenêtre de validation autour dudit plot prédit. Chaque plot apparaissant dans la fenêtre de validation d'une piste nominale existante est candidate à l'association avec ladite piste.

Dans une étape 321, le module d'analyse 102 initialise une variable *k* à « 0 ». La variable permet d'énumérer les pistes nominales existantes.

Dans une étape 322, le module d'analyse 102 débute une analyse de la *k^{éme}* piste nominale existante, notée *pisteₖ.* Lors de l'étape 322, le module d'analyse 102 détermine si au moins un plot veille correspond à la piste nominale existante *pisteₖ.* Si c'est le cas, dans un mode de réalisation, le module d'analyse 102 affecte, lors d'une étape 326, le plot veille le plus proche suivant une métrique prédéfinie de la position du plot prédit correspondant à la piste nominale existante *pisteₖ.* La métrique prédéfinie est par exemple une distance euclidienne.

Sinon, si aucun plot veille ne correspond à la piste nominale existante *pisteₖ,* dans une étape 323, le module d'analyse 102 détermine si au moins un plot spécifique correspond à la piste nominale existante *pisteₖ.* Si c'est le cas, dans un mode de réalisation, le module d'analyse 102 affecte, lors d'une étape 325, le plot spécifique le plus proche suivant la métrique prédéfinie de la position du plot prédit correspondant à la piste nominale existante *pisteₖ.*

Sinon, si aucun plot spécifique ne correspond à la piste nominale existante *pisteₖ,* le module d'analyse 102 met fin à l'analyse de la piste *pisteₖ* lors d'une étape 324.

Les étapes 326, 323 et 324 sont suivies d'une étape 327 au cours de laquelle le module d'analyse 102 incrémente d'une unité la variable *k*.

Dans une étape 328, le module d'analyse 102 compare la valeur de la variable *k* avec une variable *K* correspondant au nombre de pistes nominales existantes. Si la variable *k* égale la variable *K*, le module d'analyse 102 met fin à l'étape 32. Sinon, le module d'analyse 102 met de nouveau en oeuvre l'étape 322.

Dans un mode de réalisation, lorsqu'une piste nominale existante n'est pas mise à jour pendant un nombre d'images prédéfini, ladite piste est abandonnée par le module d'analyse 102.

La **Fig. 6** illustre schématiquement l'étape 40 du procédé de détection et de pistage de cibles selon l'invention.

Dans une étape 400, le module d'analyse 102 effectue une pré-corrélation entre chaque plot classé TBD lors de l'étape 37 et chaque piste TBD ou transitoire. Un objectif de cette pré-corrélation est de déterminer pour chaque piste TBD ou transitoire existante, quel plot pourrait correspondre à cette piste. Dans un mode de réalisation, une fonction d'entretien de piste est appliquée à chaque piste TBD ou transitoire existante afin de déterminer où devrait se trouver un plot correspondant à ladite piste. Cette fonction d'entretien de piste permet de déterminer une position d'un plot prédit et une fenêtre de validation autour dudit plot prédit. Chaque plot apparaissant dans la fenêtre de validation d'une piste TBD ou transitoire existante est candidate à l'association avec ladite piste.

Dans une étape 401, le module d'analyse 102 initialise une variable *l* à « 0 ». La variable permet d'énumérer les pistes TBD ou transitoires existantes.

Dans une étape 402, le module d'analyse 102 débute une analyse de la *l^{éme}* piste TBD ou transitoire existante, notée *pisteₗ.* Lors de l'étape 402, le module d'analyse 102 détermine si au moins un plot TBD correspond à la piste TBD ou transitoire existante *pisteₗ.* Si c'est le cas, dans un mode de réalisation, le module d'analyse 102 affecte, lors d'une étape 403, le plot TBD le plus proche suivant la métrique prédéfinie de la position du plot prédit correspondant à la piste TBD ou transitoire existante *pisteₗ.*

L'étape 403 est suivie d'une étape 404 au cours de laquelle le module d'analyse 102 incrémente la variable *l* d'une unité.

Si aucun plot TBD ne correspond à la piste TBD ou transitoire existante *pisteₗ*, l'étape 402 est suivie directement par l'étape 404.

Dans une étape 405, le module d'analyse 102 compare la valeur de la variable *l* avec une variable *L* correspondant au nombre de pistes TBD ou transitoires existantes. Si la variable *l* égale la variable *L*, le module d'analyse 102 met fin à l'étape 40. Sinon, le module d'analyse 102 met de nouveau en oeuvre l'étape 402.

Dans un mode de réalisation, lorsqu'une piste TBD ou transitoire existante n'est pas mise à jour pendant un nombre d'images prédéfini, ladite piste est abandonnée par le module d'analyse 102.

## Revendications

1. Procédé de détection et de pistage de cibles dans une série d'images fournies par un système optronique (10), **caractérisé en ce que** le procédé comprend pour une image courante :
obtenir (30) au moins un plot compris dans ladite image courante et pour chaque plot, une valeur représentative d'une caractéristique dudit plot ;
classer (31) chaque plot en fonction de ladite valeur représentative dans une première catégorie lorsque ladite valeur représentative est supérieure à un premier seuil (*T*₁) prédéfini ou dans une deuxième catégorie lorsque ladite valeur représentative est comprise entre le premier seuil prédéfini et un deuxième seuil prédéfini (*T*₂) inférieur au premier seuil prédéfini, les plots de deuxième catégorie ayant une probabilité de fausse alarme plus élevée que les plots de première catégorie;
pour chaque chaîne spatio-temporelle de plots existante d'un premier type, dite piste existante du premier type, ayant été formée à partir de plots détectés dans des images de ladite série précédant l'image courante, affecter (32) un plot de première catégorie à ladite piste existante du premier type lorsqu'au moins un plot de première catégorie est compatible suivant un critère prédéfini avec ladite piste existante du premier type, et lorsqu'aucun plot de première catégorie n'est compatible avec ladite piste existante du premier type, affecter un plot de deuxième catégorie lorsqu'au moins un plot de deuxième catégorie est compatible suivant le critère prédéfini avec la piste existante du premier type, une affectation à une piste existante du premier type permettant de poursuivre ladite piste existante du premier type dans l'image courante ;
créer (34) une nouvelle piste du premier type pour chaque plot de première catégorie n'ayant pas été affecté à une piste existante ;
classer chaque plot de deuxième catégorie n'ayant pas été affecté à une piste existante du premier type dans une troisième catégorie si un nombre de pixels composant ce plot est supérieur à un troisième seuil prédéfini et dans un quatrième catégorie sinon ;
pour chaque chaîne spatio-temporelle de plots existante d'au moins un deuxième type, dite piste existante du deuxième type, ayant été formée à partir de plots détectés dans des images de ladite série précédant l'image courante, affecter un plot de troisième catégorie à ladite piste existante du deuxième type lorsqu'au moins un plot de troisième catégorie est compatible suivant le critère prédéfini avec ladite piste existante du deuxième type et transformer ladite piste existante du deuxième type en piste existante de premier type lorsque le nombre de plots composant ladite piste dépasse un nombre de plots prédéfini ;
créer une nouvelle piste du deuxième type pour chaque plot de troisième catégorie n'ayant pas été affecté à une piste existante du deuxième type.

2. Procédé selon la revendication 1, **caractérisé en ce que** la valeur représentative d'une caractéristique dudit plot est une valeur de SNR représentative de valeurs de SNR de pixels appartenant audit plot, les premier et deuxième seuils prédéfinis étant des valeurs prédéfinies de SNR.

3. Procédé selon la revendication 1 ou 2, **caractérisé en ce qu'**un plot est compatible avec une piste existante du premier ou du deuxième type lorsqu'il est compris dans une sous-partie de l'image courante, dite fenêtre de validation, correspondant à ladite piste, une fenêtre de validation étant définie autour d'une prédiction d'une position, dite position prédite, dans laquelle doit se trouver un plot correspondant à ladite piste dans l'image courante, ladite position étant obtenue à partir d'une fonction d'entretien de piste en prenant en compte des propriétés cinématiques d'une cible pistée à partir de ladite piste,

4. Procédé selon la revendication 3, **caractérisé en ce que** lorsqu'une pluralité de plots de première catégorie est compatible avec une piste existante du premier type, le plot de première catégorie le plus proche de la position prédite selon un critère de proximité prédéfini est affecté à ladite piste et lorsqu'une pluralité de plots de deuxième catégorie est compatible avec une piste existante du premier type, le plot de deuxième catégorie le plus proche de la position prédite selon le critère de proximité prédéfini est sélectionné, seuls des plots de première ou deuxième catégorie pouvant être affectés à une piste de premier type,

5. Procédé selon la revendication 3 ou 4, **caractérisé en ce que**, lorsqu'une pluralité de plots de troisième catégorie est compatible avec une piste existante du deuxième type, le plot de troisième catégorie le plus proche de la position prédite selon le critère de proximité prédéfini est affecté à ladite piste, seuls des plots de troisième catégorie pouvant être affectés à une piste de deuxième type.

6. Procédé selon l'une quelconque des revendications précédentes, **caractérisé en ce que** les pistes du deuxième type comprennent deux sous-types de pistes, une piste du deuxième type étant du premier sous-type tant qu'elle comprend un nombre de plots de troisième catégorie inférieur au nombre de plots prédéfini, une piste du deuxième type étant du deuxième sous-type lorsqu'elle comprend un nombre de plots supérieur au premier nombre de plots prédéfini, une piste de deuxième type du deuxième sous-type étant transformée en une piste du premier type lorsqu'une somme de valeurs de SNR représentative de plots constituant ladite piste du deuxième type est supérieure à un quatrième seuil prédéfini sur un nombre de plots successifs prédéfini, ou lorsqu'une évolution de la taille des plots de ladite piste du deuxième type est strictement croissante sur un deuxième nombre de plots successifs prédéfini, ou lorsqu'une évolution du SNR des plots de ladite piste du deuxième type est strictement croissante sur un troisième nombre de plots successifs prédéfini.

7. Procédé selon la revendication 6, **caractérisé en ce que** suite à l'affectation des plots de première ou de deuxième catégories à la piste existante du premier type, et avant la création d'une nouvelle piste du premier type pour chaque plot de première catégorie n'ayant pas été affecté à une piste existante, le procédé comprend en outre pour chaque piste existante du deuxième type du deuxième sous-type, affecter un plot de première catégorie à ladite piste lorsqu'au moins un plot de première catégorie est compatible suivant un critère d'affectation prédéfini avec ladite piste et, lorsqu'aucun plot de première catégorie n'est compatible avec ladite piste, affecter un plot de deuxième catégorie lorsqu'au moins un plot de deuxième catégorie est compatible suivant le critère d'affectation prédéfini avec ladite piste,

8. Dispositif (102) comprenant des moyens pour mettre en oeuvre le procédé selon l'une quelconque des revendications 1 à 7.

9. Equipement (10) comprenant un dispositif selon la revendication 8.

10. Programme d'ordinateur, **caractérisé en ce qu'**il comprend des instructions pour mettre en œuvre, par un dispositif (102), le procédé selon l'une quelconque des revendications 1 à 7, lorsque ledit programme est exécuté par un processeur dudit dispositif (102).

11. Moyens de stockage, **caractérisés en ce qu'**ils stockent un programme d'ordinateur comprenant des instructions pour mettre en oeuvre, par un dispositif (102), le procédé selon l'une quelconque des revendications 1 à 7, lorsque ledit programme est exécuté par un processeur dudit dispositif (102).

## Patentansprüche

1. Verfahren zur Erkennung und Spurverfolgung von Zielen in einer Reihe von von einem optronischen System (10) gelieferten Bildern, **dadurch gekennzeichnet, dass** das Verfahren für ein aktuelles Bild enthält:
Erhalt (30) mindestens eines im aktuellen Bild enthaltenen Punkts und für jeden Punkt eines für ein Merkmal des Punkts repräsentativen Werts;
Einordnen (31) jedes Punkts abhängig vom repräsentativen Wert in einer ersten Kategorie, wenn der repräsentative Wert höher ist als eine vordefinierte erste Schwelle (T₁), oder in einer zweiten Kategorie, wenn der repräsentative Wert zwischen der ersten vordefinierten Schwelle und einer zweiten vordefinierten Schwelle (T₂) niedriger als die erste vordefinierte Schwelle liegt, wobei die Punkte zweiter Kategorie eine höhere Fehlalarmwahrscheinlichkeit haben als die Punkte erster Kategorie;
für jede existierende raumzeitliche Kette von Punkten eines ersten Typs, existierende Spur des ersten Typs genannt, die ausgehend von in Bildern der Reihe vor dem aktuellen Bild erkannten Punkten geformt wurde, Zuweisen (32) eines Punkts erster Kategorie zur existierenden Spur des ersten Typs, wenn mindestens ein Punkt erster Kategorie gemäß einem vordefinierten Kriterium mit der existierenden Spur des ersten Typs kompatibel ist, und wenn kein Punkt erster Kategorie mit der existierenden Spur des ersten Typs kompatibel ist, Zuweisen eines Punkts zweiter Kategorie, wenn mindestens ein Punkt zweiter Kategorie gemäß dem vordefinierten Kriterium mit der existierenden Spur des ersten Typs kompatibel ist, wobei eine Zuweisung zu einer existierenden Spur des ersten Typs es ermöglicht, die existierende Spur des ersten Typs im aktuellen Bild zu verfolgen;
Erzeugen (34) einer neuen Spur des ersten Typs für jeden Punkt erster Kategorie, der nicht einer existierenden Spur zugewiesen wurde;
Einordnen jedes Punkts zweiter Kategorie, der nicht einer existierenden Spur des ersten Typs zugewiesen wurde, in einer dritten Kategorie, wenn eine Anzahl von diesen Punkt bildenden Pixeln höher ist als eine dritte vordefinierte Schwelle, und sonst in einer vierten Kategorie;
für jede existierende raumzeitliche Kette von Punkten mindestens eines zweiten Typs, existierende Spur des zweiten Typs genannt, die ausgehend von in Bildern der Reihe vor dem aktuellen Bild erkannten Punkten geformt wurde, Zuweisen eines Punkt dritter Kategorie zur existierenden Spur des zweiten Typs, wenn mindestens ein Punkt dritter Kategorie gemäß dem vordefinierten Kriterium mit der existierenden Spur des zweiten Typs kompatibel ist, und Umwandeln der existierenden Spur des zweiten Typs in eine existierende Spur ersten Typs, wenn die Anzahl von die Spur formenden Punkten eine vordefinierte Anzahl von Punkten überschreitet; Erzeugen einer neuen Spur des zweiten Typs für jeden Punkt dritter Kategorie, der nicht einer existierenden Spur des zweiten Typs zugewiesen wurde.

2. Verfahren nach Anspruch 1, **dadurch gekennzeichnet, dass** der für ein Merkmal des Punkts repräsentative Wert ein für SNR-Werte von zum Punkt gehörenden Pixeln repräsentativer SNR-Wert ist, wobei die erste und die zweite vordefinierte Schwelle vordefinierte SNR-Werte sind.

3. Verfahren nach Anspruch 1 oder 2, **dadurch gekennzeichnet, dass** ein Punkt mit einer existierenden Spur des ersten oder des zweiten Typs kompatibel ist, wenn er in einem der Spur entsprechenden, Validierungsfenster genannten Teilbereich des aktuellen Bilds enthalten ist, wobei ein Validierungsfenster um eine Vorhersage einer Position herum, vorhergesagte Position genannt, definiert wird, in der sich ein der Spur im aktuellen Bild entsprechender Punkt befinden muss, wobei die Position ausgehend von einer Spurhaltungsfunktion unter Berücksichtigung der kinematischen Eigenschaften eines ausgehend von der Spur verfolgten Ziels erhalten wird.

4. Verfahren nach Anspruch 3, **dadurch gekennzeichnet, dass**, wenn eine Vielzahl von Punkten erster Kategorie mit einer existierenden Spur des ersten Typs kompatibel ist, der Punkt erster Kategorie, der der vorhergesagten Position gemäß einem vordefinierten Näherungskriterium am nächsten ist, der Spur zugewiesen wird, und wenn eine Vielzahl von Punkten zweiter Kategorie mit einer existierenden Spur des ersten Typs kompatibel ist, der Punkt zweiter Kategorie, der der vorhergesagten Position gemäß dem vordefinierten Näherungskriterium am nächsten ist, ausgewählt wird, wobei nur Punkte erster oder zweiter Kategorie einer Spur ersten Typs zugewiesen werden können.

5. Verfahren nach Anspruch 3 oder 4, **dadurch gekennzeichnet, dass**, wenn eine Vielzahl von Punkten dritter Kategorie mit einer existierenden Spur des zweiten Typs kompatibel ist, der Punkt dritter Kategorie, der der vorhergesagten Position gemäß dem vordefinierten Näherungskriterium am nächsten ist, der Spur zugewiesen wird, wobei nur Punkte dritter Kategorie einer Spur zweiten Typs zugewiesen werden können.

6. Verfahren nach einem der vorhergehenden Ansprüche, **dadurch gekennzeichnet, dass** die Spuren des zweiten Typs zwei Subtypen von Spuren enthalten, wobei eine Spur des zweiten Typs vom ersten Subtyp ist, solange sie eine Anzahl von Punkten dritter Kategorie niedriger als die vordefinierte Anzahl von Punkten enthält, wobei eine Spur des zweiten Typs vom zweiten Subtyp ist, wenn sie eine Anzahl von Punkten höher als die erste vordefinierte Anzahl von Punkten enthält, wobei eine Spur zweiten Typs des zweiten Subtyps in eine Spur des ersten Typs umgewandelt wird, wenn eine Summe von SNR-Werten, die für Punkte repräsentativ ist, die die Spur des zweiten Typs bilden, höher ist als eine vierte vordefinierte Schwelle über eine vordefinierte Anzahl von aufeinanderfolgenden Punkten, oder wenn eine Entwicklung der Größe der Punkte der Spur des zweiten Typs über eine zweite vordefinierte Anzahl von aufeinanderfolgenden Punkten strikt steigend ist, oder wenn eine Entwicklung des SNR der Punkte der Spur des zweiten Typs über eine dritte vordefinierte Anzahl von aufeinanderfolgenden Punkten strikt steigend ist.

7. Verfahren nach Anspruch 6, **dadurch gekennzeichnet, dass** nach der Zuweisung der Punkte erster oder zweiter Kategorien zur existierenden Spur des ersten Typs und vor der Erzeugung einer neuen Spur des ersten Typs für jeden Punkt erster Kategorie, der nicht einer existierenden Spur zugewiesen wurde, das Verfahren außerdem für jede existierende Spur des zweiten Typs des zweiten Subtyps die Zuweisung eines Punkts erster Kategorie zu der Spur enthält, wenn mindestens ein Punkt erster Kategorie gemäß einem vordefinierten Zuweisungskriterium mit der Spur kompatibel ist, und wenn kein Punkt erster Kategorie mit der Spur kompatibel ist, Zuweisung eines Punkts zweiter Kategorie, wenn mindestens ein Punkt zweiter Kategorie gemäß dem vordefinierten Zuweisungskriterium mit der Spur kompatibel ist.

8. Vorrichtung (102), die Einrichtungen zur Durchführung des Verfahrens nach einem der Ansprüche 1 bis 7 enthält.

9. Ausrüstung (10), die eine Vorrichtung nach Anspruch 8 enthält.

10. Computerprogramm, **dadurch gekennzeichnet, dass** es Anweisungen zur Durchführung des Verfahrens nach einem der Ansprüche 1 bis 7 durch eine Vorrichtung (102) enthält, wenn das Programm von einem Prozessor der Vorrichtung (102) ausgeführt wird.

11. Speichereinrichtungen, **dadurch gekennzeichnet, dass** sie ein Computerprogramm speichern, das Anweisungen zur Durchführung des Verfahrens nach einem der Ansprüche 1 bis 7 durch eine Vorrichtung (102) enthält, wenn das Programm von einem Prozessor der Vorrichtung (102) ausgeführt wird.

## Claims

1. Method for detecting and tracking targets in a series of images supplied by an optronic system (10), **characterised in that** the method comprises, for a current image:
obtaining (30) at least one spot included in said current image and, for each spot, a value representing a characteristic of said spot;
classifying (31) each spot according to said representative value in a first category when said representative value is higher than a first predefined threshold (*T*₁) or in a second category when said representative value lies between the first predefined threshold and a second predefined threshold (*T*₂) lower than the first predefined threshold, the spots in the second category having a higher probability of false alarm than the spots in the first category;
for each existing spatiotemporal chain of spots of a first type, referred to as an existing track of the first type, which has been formed from spots detected in images in said series preceding the current image, allocating (32) a spot in the first category to said existing track of the first type when at least one spot in the first category is compatible, in accordance with a predefined criterion, with said existing track of the first type and, when no spot in the first category is compatible with said existing track of the first type, allocating a spot in the second category when at least one spot in the second category is compatible, in accordance with the predefined criterion, with the existing track of the first type, an allocation of an existing track of the first type making it possible to pursue said existing track of the first type in the current image;
creating (34) a new track of the first type for each spot in the first category that has not been allocated to an existing track;
classifying each spot in the second category that has not been allocated to an existing track of the first type in a third category if a number of pixels making up this spot is higher than a third predefined threshold and in a fourth category otherwise;
for each existing spatiotemporal chain of spots of at least one second type, referred to as an existing track of the second type, which has been formed from spots detected in images in said series preceding the current image, allocating a spot in the third category to said existing track of the second type when at least one spot in the third category is compatible, in accordance with the predefined criterion, with said existing track of the second type and transforming said existing track of the second type into an existing track of the first type when the number of spots making up said track exceeds a predefined number of spots;
creating a new track of the second type for each spot in the third category that has not been allocated to an existing track of the second type.

2. Method according to claim 1, **characterised in that** the value representing a characteristic of said spot is an SNR value representing SNR values of pixels belonging to said spot, the first and second predefined thresholds being of predefined SNR values.

3. Method according to claim 1 or 2, **characterised in that** a spot is compatible with an existing track of the first or second type when it is included in a subpart of the current image, referred to as a validation window, corresponding to said track, a validation window being defined around a prediction of a position, referred to as a predicted position, in which a spot corresponding to said track in the current image must be situated, said position being obtained from a track maintenance function taking into account kinematic properties of a target tracked using said track.

4. Method according to claim 3, **characterised in that**, when a plurality of spots in the first category are compatible with an existing track of the first type, the spot in the first category closest to the predicted position in accordance with a predefined proximity criterion is allocated to said track and, when a plurality of spots in the second category are compatible with an existing track of the first type, the spot in the second category closest to the predicted position according to the predefined proximity criterion is selected, only spots in the first or second category being able to be allocated to a track of the first type.

5. Method according to claim 3 or 4, **characterised in that**, when a plurality of spots in the third category are compatible with an existing track of the second type, the spot in the third category closest to the predicted position in accordance with the predefined proximity criterion is allocated to said track, only spots in the third category being able to be allocated to a track of the second type.

6. Method according to any one of the preceding claims, **characterised in that** the tracks of the second type comprise two track subtypes, a track of the second type being of the first subtype as long as it comprises a number of spots of the third category smaller than a predefined number of spots, a track of the second type being of the second subtype when it comprises a number of spots greater than the first predefined number of spots, a track of the second type of the second subtype being transformed into a track of the first type when a sum of SNR values representing spots constituting said track of the second type is higher than a fourth predefined threshold over a predefined number of successive spots, or when a change in the size of the spots of said track of the second type is strictly increasing over a second predefined number of successive spots, or when a change in the SNR of the spots of said track of the second type is strictly increasing over a third predefined number of successive spots.

7. Method according to claim 6, **characterised in that**, following the allocation of the spots of the first or second categories to the existing track of the first type, and before the creation of a new track of the first type for each spot in the first category that has not been allocated to an existing track, the method further comprises, for each existing track of the second type of the second subtype, allocating a spot in the first category to said track when at least one spot in the first category is compatible, in accordance with a predefined allocation criterion, with said track and, when no spot in the first category is compatible with said track, allocating a spot in the second category when at least one spot in the second category is compatible, in accordance with the predefined allocation in, with said track.

8. Device (102) comprising means for implementing the method according to any one of claims 1 to 7.

9. Equipment (10) comprising a device according to claim 8.

10. Computer program, **characterised in that** it comprises instructions for implementing, by a device (102), the method according to any one of claims 1 to 7, when said program is executed by a processor of said device (102).

11. Storage means, **characterised in that** they store a computer program comprising instructions for implementing, by a device (102), the method according to any one of claims 1 to 7, when said program is executed by a processor of said device (102).
